# EUROPÄISCHE PATENTSCHRIFT

(11) **EP 2 667 759 B1**
(45) Veröffentlichungstag und Bekanntmachung des Hinweises auf die Patenterteilung: **18.11.2015**
(21) Anmeldenummer: 11770390.0
(22) Anmeldetag: 15.09.2011
(51) Int. Cl.: A47J 37/06, A47J 37/07, A47J 36/00

(54) **GRILLAUFSATZ MIT HÄHNCHENBRÄTER**
BARBECUE ACCESSORY WITH A CHICKEN ROASTER
ACCESSOIRE À POSER SUR UN BARBECUE ET POURVU D'UNE RÔTISSOIRE À POULET

(30) Priorität: 24.01.2011 DE 202011001877 U; 30.03.2011 DE 202011004636 U
(43) Veröffentlichungstag der Anmeldung: 04.12.2013
(73) Patentinhaber: Gurris GmbH, 68782 Brühl (DE)
(72) Erfinder: GURRIS, Matthias, 68782 Brühl (DE)
(74) Vertreter: Sommer, Peter
(86) Internationale Anmeldenummer: PCT/EP2011/066047
(87) Internationale Veröffentlichungsnummer: WO 2012/079789

(56) Entgegenhaltungen:
- US-B1- 6 272 976
- US-B1- 6 553 896
- US-B1- 6 575 082

## Beschreibung

### Technisches Gebiet

Die Erfindung betrifft einen Grillaufsatz mit Hähnchenbräter für die Zubereitung von in vertikaler Richtung auf einem Grill angeordnetem Grillgut in Form von Geflügel, insbesondere von Hähnchen.

### Stand der Technik

Aus der US 6,622,616 B1 ist ein Grillaufsatz für die Zubereitung von Geflügel bekannt, wobei der Grillaufsatz eine Bodenplatte zum Aufsetzen auf einen Grill und eine Brathaube aufweist, welche mit der Bodenplatte verbunden werden kann und welche innerhalb eines nach oben überstehenden Bundes auf der Bodenplatte angeordnet ist. Die Bodenplatte weist Durchgangslöcher auf, um die Wärme eindringen zu lassen. Weiterhin ist eine Abstützung vorgesehen, in die eine Dose eingestellt werden kann und auf welcher das Geflügel in vertikaler Richtung aufgesteckt wird. Insgesamt handelt es sich um ein weitgehend geschlossenes System.

Die Verwendung eines Hähnchenhalters mit der Möglichkeit zur Aufnahme einer Bierdose ist auch in der US 6,553,896 B1 beschrieben, wobei auch hier das Geflügel vertikal ausgerichtet ist. Es handelt sich hierbei um eine simple Form eines Hähnchenbräters.

Aus der US 6,272,976 B1 ist bekannt, ein zu garendes Geflügel vertikal auf einem Glutbett anzuordnen und das Grillgut mit einer Brathaube abzudecken. Diese Brathaube sitzt auf der Glut auf bzw. wird sogar noch seitlich von der Glut überdeckt, so dass der umschlossene Raum weitgehend verschlossen ist.

Mit der vorliegenden Erfindung soll die Zubereitung von Geflügel bei offenen oder geöffneten Grills verbessert werden, wobei insbesondere auch ein charakteristischer Bratgutgeschmack erhalten werden soll. Darüber hinaus soll das Geflügel innen saftig und außen knusprig sein. Schließlich soll vermieden werden, dass im Grillgut enthaltenes Fett auf den Grill tropft.

### Darstellung der Erfindung

Ein erfindungsgemäßer Grillaufsatz für die Zubereitung von in vertikaler Richtung auf einem Grill angeordnetem Geflügel umfasst einen aus einem Geflügelhalter und einer Bodenplatte gebildeten Hähnchenbräter einerseits und eine sich über den Hähnchenbräter erstreckende und diesen zumindest teilweise umschließende Brathaube andererseits. Zwischen der Brathaube und der Bodenplatte des Hähnchenbräters liegt in gebrauchsfertigen Zustand ein Spalt vor, durch den vom Grill aufsteigende heiße Gase in die Brathaube eindringen können.

Ein gebrauchsfertiger Zustand ist dann erreicht, wenn die Bodenplatte auf einem Grill oder auf einem Rost eines Grills steht und die Brathaube über den auf der Bodenplatte angeordneten Hähnchenbräter gestülpt ist.

Vorteilhafterweise kann die Bodenplatte mindestens zwei seitlich abstehende Griffe aufweisen und kann die Brathaube Ausnehmungen für die Griffe aufweisen. Dadurch kann die Bodenplatte einerseits bequem auf dem Grill positioniert werden und andererseits kann die Brathaube trotz der seitlichen Erstreckung der Griffe die Bodenplatte auch im Bereich der Griffe als Haube überdecken.

Ein weiterer erfindungsgemäßer Grillaufsatz für die Zubereitung von in vertikaler Richtung auf einem Grill angeordnetem Geflügel umfasst einen aus einem Geflügelhalter und einer Bodenplatte gebildeten Hähnchenbräter einerseits und eine sich über den Hähnchenbräter erstreckende und diesen zumindest teilweise umschließende Brathaube andererseits, wobei die Bodenplatte einen sich seitlich erstreckenden Flansch mit einer Vielzahl von Öffnungen aufweist und dass die Öffnungen so auf dem Flansch angeordnet sind, dass die vom Grill aufsteigende heiße Gase in die auf den Flansch aufgesetzte Brathaube eindringen.

Der Vorteil dieser Anordnung besteht darin, dass eine eigenständige und zusammenhängende Gesamtanordnung bereitgestellt wird, mit der ein Aufsetzen der Brathaube unmittelbar auf den Grillrost nicht erforderlich ist.

Der Geflügelhalter kann einen Aufnahmeraum für einen mit einer Flüssigkeit gefüllten oder befüllbaren Behälter aufweisen und der Behälter kann mit mindestens einer Öffnung zur Abgabe von Flüssigkeit oder Dampf während des Grillvorgangs versehen sein. Derartige Geflügelhalter sind für die Zubereitung von sogenannten Bierdosen-Hähnchen dem Prinzip nach bekannt.

Dabei kann der Behälter in der Aufnahmeeinrichtung des Geflügelhalters in einem Abstand zu der Bodenplatte gehalten sein, wodurch eine ungleichmäßige Wärmeübertragung an den Behälter vermieden wird.

Vorteilhafterweise kann die Bodenplatte einen vom Grill weg nach oben umgebogenen Rand zum Auffangen des vom Grillgut austretenden Bratensaftes und/oder Bratfetts aufweisen. An diesem Rand können auch die Griffe angebracht sein.

Weiterhin kann im oberen Drittel der Brathaube ein von außen ablesbares Thermometer für die Innentemperatur in der Brathaube angeordnet sein.

Wenn im oberen Drittel der Brathaube eine von außen verschließbare Lüftungsöffnung angeordnet ist, kann über die Größe der Öffnung eine Durchlüftung des Innenraums der Brathaube bereitgestellt werden, wie es von geschlossenen Grills im Prinzip bekannt ist.

Vorteilhafterweise kann der Flansch einen Anschlag aufweisen, der noch weiter radial außen liegt als die Öffnungen. Dadurch strömen alle für das Grillen des unter der Brathaube angeordneten Grillguts erforderlichen Gase ausschließlich über die Öffnungen in die Brathaube.

Weiterhin kann der Flansch in Griffe übergehen oder können separat ausgebildete Griffe mit dem Flansch verbunden sein.

### Kurze Beschreibung der Zeichnungen

In der Zeichnung ist ein Ausführungsbeispiel der Erfindung dargestellt. Es zeigt:
- Fig. 1: eine Prinzipskizze eines erfindungsgemäßen Grillaufsatzes zur Verwendung auf einen offenen oder geöffneten Grill;
- Fig. 2: den aus einem Geflügelhalter und einer Bodenplatte aus Fig. 1 gebildeten Hähnchenbräter in einer Ansicht von oben;
- Fig. 3: ein Detail einer Brathaube aus Fig. 1 im Bereich eines Griffs;
- Fig. 4: ein weiterer erfindungsgemäßer Grillaufsatz mit Lochrand ohne Haube in Draufsicht;
- Fig. 5: ein Detail aus Fig. 4 im Schnitt mit Haube.

### Ausführungsbeispiel

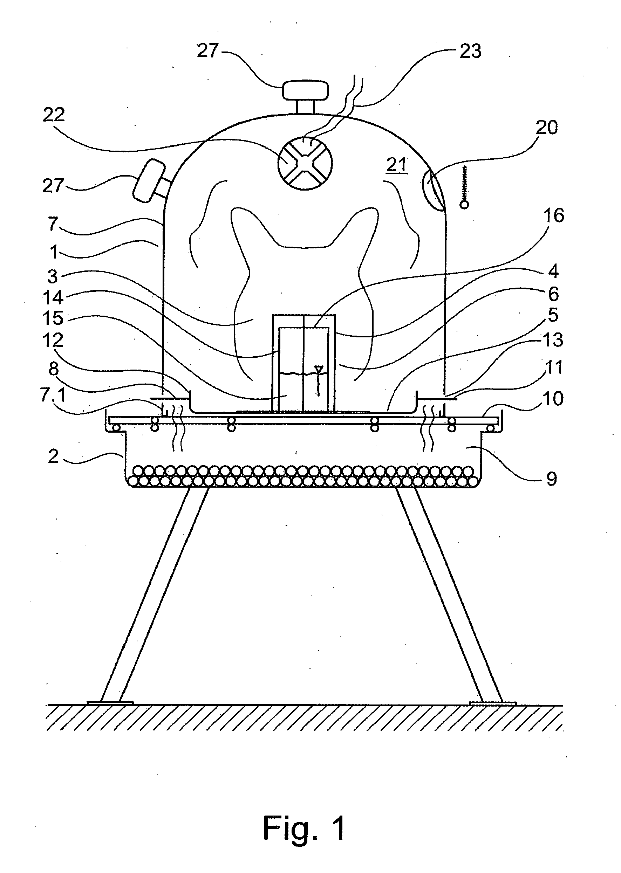

In Fig. 1 ist ein erfindungsgemäßer Grillaufsatz 1 für die Zubereitung von in vertikaler Richtung auf einem Grill 2 angeordnetem Grillgut in Form von Geflügel 3 dargestellt, der einen aus einem Geflügelhalter 4 und einer Bodenplatte 5 gebildeten Hähnchenbräter 6 einerseits und eine sich über den Hähnchenbräter 6 erstreckende und diesen zumindest teilweise umschließende Brathaube 7 andererseits umfasst. Zwischen der Brathaube 7 und der Bodenplatte 5 des Hähnchenbräters 6 liegt in gebrauchsfertigen Zustand ein Spalt 8 vor, durch den von einem Glutbett des Grills 2 aufsteigende heiße Gase 9 in die Brathaube 7 eindringen können.

In dem dargestellten gebrauchsfertiger Zustand des Grillaufsatzes befindet sich die Bodenplatte 5 auf einem Rost 10 des Grills 2 und die Brathaube 7 ist über den auf der Bodenplatte 5 angeordneten Hähnchenbräter 6 gestülpt und sitzt auf dem Rost 10 auf.

Die Bodenplatte 5 weist zwei seitlich abstehende Griffe 11 auf, die an einem vom Grill 2 weg nach oben umgebogenen Rand 12 der Bodenplatte 5 angebracht sind, wobei der Rand 12 zum Auffangen des vom Grillgut 3 austretenden Bratensaftes und/oder Bratfetts dient. Die Bodenplatte 5 kann geschlossen ausgebildet sein, wenn verhindert werden soll, dass aus dem Grillgut austretendes Fett in das darunter liegende Glutbett gelangt. Aus demselben Grund kann die Brathaube 7 einen nach innen umgestülpten U-förmigen und umlaufenden Rand 7.1 aufweisen, in dem sich an der Innenseite der Brathaube niederschlagendes und herablaufendes Fett sammelt.

Die Brathaube 7 weist Ausnehmungen 13 für die Griffe 11 auf, sodass die Bodenplatte 5 einerseits bequem auf dem Grill 2 positioniert werden kann und andererseits die Brathaube 7 trotz der seitlichen Erstreckung der Griffe 11 die Bodenplatte 5 auch im Bereich der Griffe 11 als Haube überdeckt.

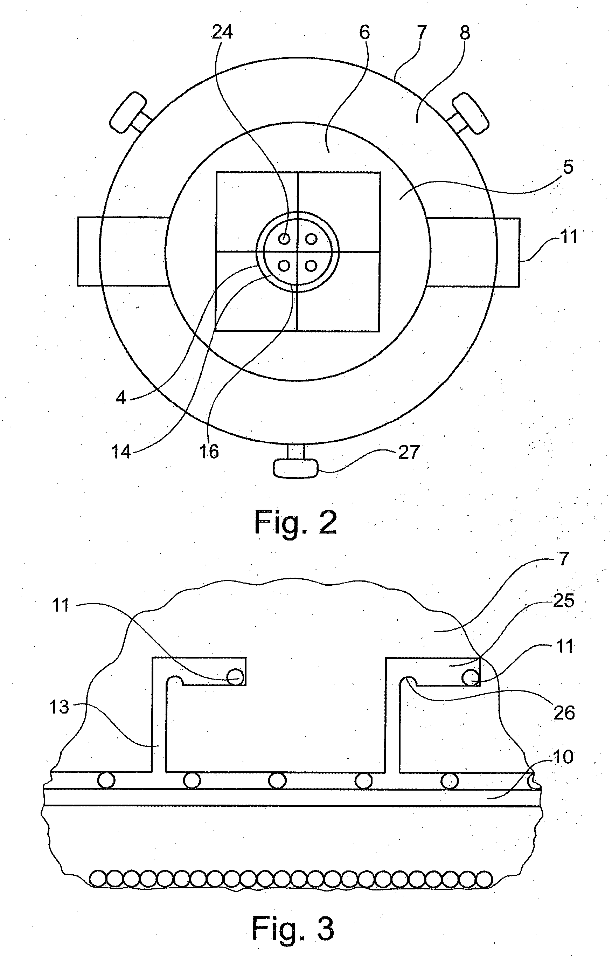

Der Geflügelhalter 4 weist einen sich von der Bodenplatte 5 weg erstreckende Aufnahmeraum 14 für einen mit einer Flüssigkeit 15 gefüllten oder befüllbaren Behälter 16 auf, wobei der Behälter 16 mit mindestens einer Öffnung zur Abgabe von Flüssigkeit oder Dampf während des Grillvorgangs versehen ist, siehe unten zu Fig. 2. Derartige Geflügelhalter 4 sind für die Zubereitung von sogenannten Bierdosen-Hähnchen dem Prinzip nach bekannt und können aus einem Drahtgestell gebildet sein.

Dabei kann der Behälter 16 in dem Aufnahmeraum 14 des Geflügelhalters 4 in einem Abstand zu der Bodenplatte 5 gehalten sein, wodurch eine ungleichmäßige Wärmeübertragung an den Behälter 16 vermieden wird.

Weiterhin kann im oberen Drittel der Brathaube 7 ein von außen ablesbares Thermometer 20 für die Temperatur im Innenraum 21 der Brathaube 7 angeordnet sein.

Ebenfalls im oberen Drittel der Brathaube 7 ist eine von außen verschließbare Lüftungsöffnung 22 angeordnet, wobei über die Größe der Öffnung eine Durchlüftung des Innenraums 21 der Brathaube 7 bereitgestellt wird, wie es von geschlossenen Grills im Prinzip bekannt ist. Dabei strömen die vom Grill aufsteigenden Gase 9 in die Brathaube 7 ein, an dem Geflügel 3 vorbei und können aus der Lüftungsöffnung 22 wie angedeutet als Gas 23 austreten.

In Fig. 2 ist der aus dem Geflügelhalter 4 und der Bodenplatte 5 aus Fig. 1 gebildete Hähnchenbräter 6 in einer Ansicht von oben dargestellt, sodass Öffnungen 24 in dem in dem Aufnahmeraum 14 des Geflügelhalters 4 vorhandenen Behälter 16 erkennbar sind.

Weiterhin ist dargestellt, dass sich zwischen der Bodenplatte 5 und der Brathaube 7 der Spalt 8 befindet, der mindestens 10 mm breit sein sollte, vorzugsweise jedoch 20 bis 50 mm, um ein ausreichendes Einströmen der vom Grill emporsteigenden heißen Gase zu ermöglichen. Gerade durch dieses Einströmen der heißen gase wird der für das Grillgut typische Geschmack erzeugt.

Weiterhin ist zu erkennen, dass die Brathaube 7 im Bereich der sich von der Bodenplatte 5 weg erstreckenden Griffe 11 Durchbrechungen 13 aufweist, sodass ein Teil der Griffe 11 innerhalb der Brathaube 7 und ein Teil der Griffe 11 außerhalb der Brathaube 7 liegt.

In Fig. 3 ist ein Detail der Brathaube 7 aus Fig. 1 im Bereich des Griffs 11 dargestellt, nämlich die Ausnehmung 13. Diese Ausnehmung 13 weist einen vertikal ausgerichteten Abschnitt auf, um die Brathaube 7 an den Griffen 11 entlang auf den Rost 10 eines Grills abzusetzen.

Die Ausnehmung 13 weist darüber hinaus noch einen Verriegelungsabschnitt 25 mit einer Sperre 26 auf, der quer zum vertikal verlaufenden Abschnitt liegt. Durch stückweises Verdrehen der Brathaube 7 um ihre Längsachse wird die Sperre 26 überwunden und der Griff 11 liegt in dem Verriegelungsabschnitt 25. In dieser Stellung kann der gesamte Grillaufsatz 1 an der Brathaube 7 angehoben werden, wozu diese einen oder mehrere Griffe 27 (Fig. 1, Fig. 2) aufweist.

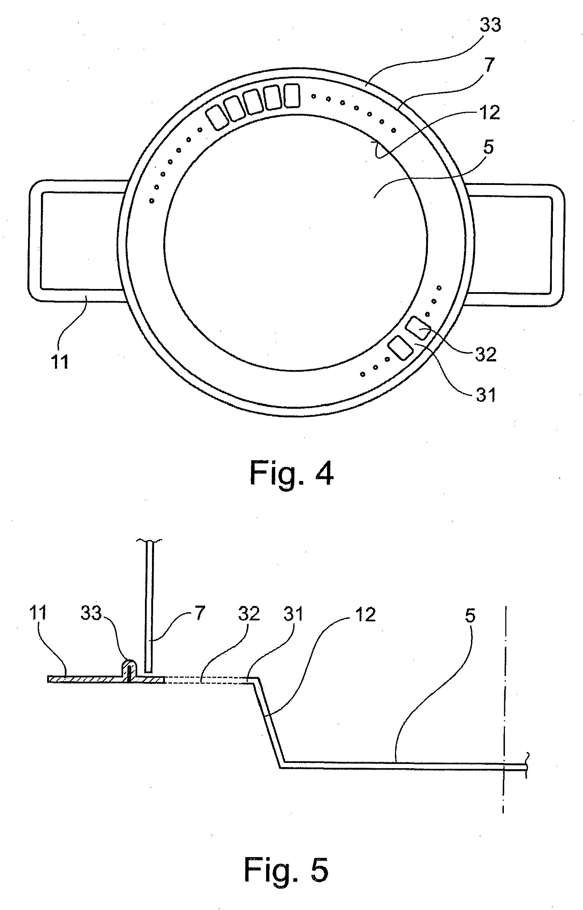

In Fig. 4 ist eine alternative Ausführung mit einem Grillaufsatz mit Lochrand ohne Haube in Draufsicht dargestellt. Die Bodenplatte 5 weist wieder den sich nach oben erstreckenden Rand 12 auf, an den sich nun aber ein sich seitlich weiter nach außen erstreckender Flansch 31 anschließt, in dem über den Umfang verteil eine Vielzahl von Öffnungen 32 vorgesehen sind. Der Flansch weist trotz der Öffnungen 32 eine derartige radiale Erstreckung und Stabilität auf, dass die als Linie dargestellte Brathaube 7 radial außerhalb der Öffnungen 32 auf den Flansch 31 aufgesetzt werden kann. Um ein verrutschen der Brathaube 7 zu vermeiden, ist darüber hinaus an dem Flansch 31 noch ein in radialer Richtung wirkender Anschlag in Form eines nach oben hervorspringenden Wulstes 33 vorgesehen, der noch weiter radial außen liegt als die Öffnungen 32. Dieser Flansch 31 kann weiterhin in die Griffe 11 übergehen oder die Griffe können separat ausgebildet und mit dem Flansch 31 verbunden sein.

In dieser Ausführungsform treten die Öffnungen 32 im Flansch 31 an die Stelle eines Spaltes 8 aus Fig. 1, was näher in Fig. 5 erläutert wird, die ein Detail aus Fig. 4 im Teilschnitt zeigt. Zu erkennen ist ein Teil der Bodenplatte 5, an welcher der sich nach oben erstreckende Rand 12 anschließt, der wiederum in den sich in seitlicher Richtung erstreckenden Flansch 31 übergeht, sodass der Flansch 31 einen Höhenversatz zu der Bodenplatte 5 aufweist. In dem Flansch 31 ist eine sich in radialer Richtung erstreckende Öffnung 32 angebracht und noch weiter radial außenliegend weist der Flansch 31 den Wulst 33 auf. Der Wulst 33 liegt dabei soweit außerhalb auf dem Flansch 31, dass sich die Brathaube 7 auf den Flansch 31 aufsetzen lässt, wobei die Öffnung 32 innerhalb des von der Brathaube 7 überdeckten Raums oberhalb der Bodenplatte 5 liegen. Noch weiter außerhalb sind die Griffe 11 angeordnet.

Durch dies Öffnungen 32 können die zum Grillen des innerhalb der Brathaube 7 auf der Bodenplatte 5 angeordneten, nicht dargestellten Grillguts erwünschten heißen Gase in die Brathaube eindringen, ohne dass die Brathaube 7 wie in dem Ausführungsbeispiel nach Fig. 1 erforderlich auf den Grillrost gestellt werden muss.

## Patentansprüche

1. Grillaufsatz für die Zubereitung von in vertikaler Richtung auf einem Grill (2) angeordnetem Geflügel (3), umfassend einen aus einem Geflügelhalter (4) und einer Bodenplatte (5) gebildeten Hähnchenbräter (6) einerseits und eine sich über den Hähnchenbräter (6) erstreckende und diesen zumindest teilweise umschließende Brathaube (7) andererseits, **dadurch gekennzeichnet, dass** zwischen der Brathaube (7) und der Bodenplatte (5) des Hähnchenbräters (6) in gebrauchsfertigen Zustand ein Spalt (8) vorliegt, durch den vom Grill (2) aufsteigende heiße Gase (9) in die Brathaube (7) eindringen.

2. Grillaufsatz nach Anspruch 1, **dadurch gekennzeichnet, dass** die Bodenplatte (5) mindestens zwei seitlich abstehende Griffe (11) aufweist und dass die Brathaube (7) Ausnehmungen (13) für die Griffe (11) aufweist.

3. Grillaufsatz für die Zubereitung von in vertikaler Richtung auf einem Grill (2) angeordnetem Geflügel (3), umfassend einen aus einem Geflügelhalter (4) und einer Bodenplatte (5) gebildeten Hähnchenbräter (6) einerseits und eine sich über den Hähnchenbräter (6) erstreckende und diesen zumindest teilweise umschließende Brathaube (7) andererseits, **dadurch gekennzeichnet, dass** die Bodenplatte (5) einen sich seitlich erstreckenden Flansch (31) mit einer Vielzahl von Öffnungen (32) aufweist und dass die Öffnungen so auf dem Flansch angeordnet sind, dass die vom Grill (2) aufsteigende heiße Gase (9) in die auf den Flansch (31) aufgesetzte Brathaube (7) eindringen.

4. Grillaufsatz nach Anspruch 1 oder 2, **dadurch gekennzeichnet, dass** der Geflügelhalter (4) eine Aufnahmeraum (14) für einen mit einer Flüssigkeit (15) gefüllten oder befüllbaren Behälter (16) aufweist und dass der Behälter (16) mit mindestens einer Öffnung (24) zur Abgabe von Flüssigkeit (15) während des Grillvorgangs versehen ist.

5. Grillaufsatz nach Anspruch 3, **dadurch gekennzeichnet, dass** der Behälter (16) in dem Aufnahmeraum (14) des Geflügelhalters (4) in einem Abstand zu der Bodenplatte (5) gehalten ist.

6. Grillaufsatz nach einem der Ansprüche 1 bis 5, **dadurch gekennzeichnet, dass** die Bodenplatte (5) einen vom Grill (2) weg nach oben umgebogenen Rand (12) zum Auffangen des vom Grillgut (13) austretenden Bratensaftes und/oder Bratfetts aufweist.

7. Grillaufsatz nach einem der Ansprüche oder 2 und 4 bis 6, **dadurch gekennzeichnet, dass** die Griffe (11) an diesem Rand (12) angebracht sind.

8. Grillaufsatz nach einem der Ansprüche 1 bis 7, **dadurch gekennzeichnet, dass** im oberen Drittel der Brathaube (7) ein von außen ablesbares Thermometer (20) für die Temperatur des Innenraums (21) der Brathaube (7) angeordnet ist.

9. Grillaufsatz nach einem der Ansprüche 1 bis 8, **dadurch gekennzeichnet, dass** im oberen Drittel der Brathaube (7) eine von außen verschließbare Lüftungsöffnung (22) angeordnet ist.

10. Grillaufsatz nach einem der Ansprüche 3 bis 6 oder 7 bis 9, **dadurch gekennzeichnet, dass** der Flansch (31) einen Anschlag (33) aufweist, der noch weiter radial außen liegt als die Öffnungen (32).

11. Grillaufsatz nach einem der Ansprüche 3 bis 6 oder 7 bis 10, **dadurch gekennzeichnet, dass** der Flansch (31) in Griffe (11) übergeht oder dass separat ausgebildete Griffe (11) mit dem Flansch (31) verbunden sind.

## Claims

1. A grill attachment for cooking grillable food in the form of poultry (3) positioned upright on a grill (2), which grill attachment comprises, on the one hand, a chicken roaster (6) composed of a poultry holder (4) and a bottom pan (5) and, on the other hand, a roasting cover (7) extending over the chicken roaster (6) and at least partially enclosing the latter, **characterized in that** in the ready for use state, there is a gap (8) between the roasting cover (7) and the bottom pan (5) of the chicken roaster (6), through which gap hot gases (9) ascending from a bed of coals in said grill (2) are able to pass into said roasting cover (7).

2. The grill attachment as defined in claim 1, **characterized in that** said bottom pan (5) comprises at least two laterally projecting handles (11) and that said roasting cover (7) comprises openings (13) for said handles (11).

3. A grill attachment for cooking grillable food in the form of poultry (3) positioned upright on a grill (2), which grill attachment comprises, on the one hand, a chicken roaster (6) composed of a poultry holder (4) and a bottom pan (5) and, on the other hand, a roasting cover (7) extending over the chicken roaster (6) and at least partially enclosing the latter, **characterized in that** said bottom pan (5) comprises a laterally extending flange (31) having a plurality of orifices (32) and that said orifices are disposed in the flange such that the hot gases (9) ascending from said grill (2) pass into said roasting cover (7) mounted on said flange (31).

4. The grill attachment as defined in claim 1 or claim 2, **characterized in that** said poultry holder (4) comprises an accommodation chamber (14) for a container (16) filled with, or capable of being filled with, a liquid (15), and that said container (16) is provided with at least one hole (24) for the release of said liquid (15) during the grilling operation.

5. The grill attachment as defined in claim 3, **characterized in that** said container (16) is held in the accommodation chamber (14) of the poultry holder (4) at a distance from said bottom pan (5).

6. The grill attachment as defined in any one of claims 1 to 5, **characterized in that** said bottom pan (5) comprises an edge (12) that is bent upwardly and away from said grill (2) for the purpose of collecting the cooking juice and/or dripping emerging from the food being grilled (13).

7. The grill attachment as defined in one of claims 1 and 2 and claims 4 to 6, **characterized in that** said handles (11) are mounted on said edge (12).

8. The grill attachment as defined in any one of claims 1 to 7, **characterized in that** in the upper third of said roasting cover (7) there is disposed a thermometer (20) that is readable from outside and serves to indicate the temperature in the interior (21) of said roasting cover (7).

9. The grill attachment as defined in any one of claims 1 to 8, **characterized in that** in the upper third of the roasting cover (7) there is disposed a vent opening (22) that is capable of being closed from outside.

10. The grill attachment as defined in any one of claims 3 to 6 and claims 7 to 9, **characterized in that** said flange (31) has a stop member (33) that is located radially outwardly to a further extent than said orifices (32).

11. The grill attachment as defined in any one of claims 3 to 6 and claims 7 to 10, **characterized in that** said flange (31) merges into said handles (11) or that discrete handles (11) are joined to said flange (31).

## Revendications

1. Coupole de barbecue pour la préparation d'une volaille (3) placée à la verticale sur un barbecue (2), comprenant une rôtissoire à poulet (6) formée d'une broche à volaille (4) et d'une lèchefrite (5) d'une part et d'un capot de grill (7) s'étendant par-dessus la rôtissoire à poulet (6) et l'entourant au moins en partie d'autre part, **caractérisée en ce que** dans l'état prêt à l'emploi, entre le capot de grill (7) et la lèchefrite (5) de la rôtissoire à poulet (6) est présent un interstice (8) à travers lequel des gaz (9) chauds remontant du barbecue (2) pénètrent dans le capot de grill (7).

2. Coupole de barbecue selon la revendication 1, **caractérisée en ce que** la lèchefrite (5) comporte au moins deux poignées (11) débordant latéralement et **en ce que** le capot de grill (7) comporte des évidements pour les poignées (11).

3. Coupole de barbecue pour la préparation d'une volaille (3) placée à la verticale sur un barbecue (2), comprenant une rôtissoire à poulet (6) formée d'une broche à volaille (4) et d'une lèchefrite (5) d'une part et d'un capot de grill (7) s'étendant par-dessus la rôtissoire à poulet (6) et l'entourant au moins en partie d'autre part, **caractérisée en ce que** la lèchefrite (5) comporte une bride (31) s'étendant latéralement avec une pluralité d'orifices (32) et **en ce que** les orifices sont placées sur la bride de telle sorte, que les gaz (9) chauds remontant du barbecue (2) pénètrent dans le capot de grill (7) placé sur la bride (31).

4. Coupole de barbecue selon la revendication 1 ou la revendication 2, **caractérisée en ce que** la broche à volaille (4) comporte un espace de réception (14) pour un récipient (16) susceptible d'être rempli d'un liquide (15) et **en ce que** le récipient (16) est muni d'au moins un orifice (24) pour restituer du liquide (15) pendant le processus de grillade.

5. Coupole de barbecue selon la revendication 3, **caractérisée en ce que** le récipient (16) est maintenu dans l'espace de réception (14) de la broche à volaille (4) à une distance de la lèchefrite (5).

6. Coupole de barbecue selon l'une quelconque des revendications 1 à 5, **caractérisée en ce que** la lèchefrite (5) comporte un bord (12) recourbé vers le haut en s'éloignant du barbecue (2), pour collecter le jus de cuisson et/ou la graisse de cuisson s'échappant du produit à griller (13).

7. Coupole de barbecue selon l'une quelconque des revendications 1 ou 2 et 4 à 6, **caractérisée en ce que** les poignées (11) sont montées sur ledit bord (12).

8. Coupole de barbecue selon l'une quelconque des revendications 1 à 7, **caractérisée en ce que** dans le tiers supérieur du capot de grill (7) est placé un thermomètre (20) lisible par l'extérieur, pour la température de l'intérieur (21) du capot de grill (7).

9. Coupole de barbecue selon l'une quelconque des revendications 1 à 8, **caractérisée en ce que** dans le tiers supérieur du capot de grill (7) est placé un orifice d'aération (22) obturable par l'extérieur.

10. Coupole de barbecue selon l'une quelconque des revendications 3 à 6 ou 7 à 9, **caractérisée en ce que** la bride (31) comporte une butée (33) qui est située encore plus loin en direction radiale vers l'extérieur que les orifices (32).

11. Coupole de barbecue selon l'une quelconque des revendications 3 à 6 ou 7 à 10, **caractérisée en ce que** la bride (31) passe dans des poignées (11) ou **en ce que** des poignées (11) conçues séparément sont reliées avec la bride (31).
